# EUROPEAN PATENT APPLICATION

(11) **EP 2 323 088 A1**
(43) Date of publication of application: **18.05.2011**
(21) Application number: 10187358.6
(22) Date of filing: 13.10.2010
(51) Int. Cl.: G06Q 10/00, G06Q 50/00

(54) **Apparatus and method for adaptive ship-to-shore information synchronization**

(30) Priority: 13.10.2009 KR 20090097357
(71) Applicant: Electronics and Telecommunications Research Institute, Daejeon-city 305-350 (KR)
(72) Inventor: Park, Jun-Hee, 305-721, Daejeon (KR); Lee Kwang-Il, 305-761, Daejeon (KR); Lee, Ji-Hyun, 704-370, Daegu (KR); Choi, Won-Suk, 305-805, Daejeon (KR); Moon, Kyeong-Deok, 305-761, Daejeon (KR)
(74) Representative: Betten & Resch

(57) **Abstract**

Provided is an apparatus and method that may adaptively apply an amount of target information corresponding to and conditions when exchanging information between a shore and a ship. The method for an adaptive ship-to-shore information synchronization may include extracting, by a ship server within a ship, modified information from a ship information table having at least one information field to transmit the extracted modified information to a control server of a shore, and resetting, by the ship server, a modified flag value of the information transmitted to the control server as the ship server receives a message indicating that an information update at the control server is competed based on the transmitted information.

## Description

### BACKGROUND OF THE INVENTION

### 1. Field of the invention

The present invention relates to an apparatus and method for an adaptive ship-to-shore information synchronization, and more particularly, to an apparatus and method that may synchronize information used to remotely maintain and repair a ship on the ocean from a shore,

### 2. Description of the Related Art

When a ship is anchored out at sea or makes a voyage, the ship is generally limited to using a wideband radio communication. However, a satellite communication may need to be used to remotely monitor and diagnose a state of a ship sailing the ocean from a shore.

Although the satellite communication is expensive, however, the satellite communication may be provided at a relatively low bandwidth. To maintain, repair, and control the ship from the shore in the above environment, when a ship server of the ship accesses a control server of the shore, an appropriate information synchronization method may need to be used for an access means while maintaining ship information at the shore. In particular, when the satellite communication needs to be used, it is very important to minimize an information exchange between the ship and the shore.

### SUMMARY OF THE INVENTION

Some European and Japanese advanced equipment companies have applied a technology of remotely controlling a ship with respect to their own apparatuses. However, they have been using only a simple technology of compressing information to decrease an information transfer.

Currently, the Information Technology (IT) field has proposed a variety of schemes for information synchronization between a mobile device and a desktop apparatus. However, the above schemes also use a scheme of transmitting and receiving database information as is based on a mass network, and simply checking whether information has been modified, and thus may be unsuitable for an environment of a ship.

The present invention is conceived to outperform the disadvantages found in the related art and thus provides an apparatus and method that may adaptively apply an amount of target information according to circumstances and conditions when exchanging information between a ship and a shore.

According to an aspect of the present invention, there is provided a method for an adaptive ship-to-shore information synchronization, the method including: extracting, by a ship server within a ship, modified information from a ship information table having at least one information field to transmit the extracted modified information to a control server of a shore; and resetting, by the ship server, a modified flag value of the information transmitted to the control server as the ship server receives a message indicating that an information update at the control server is completed based on the transmitted information.

The transmitting of the information may include extracting the modified information according to an access scheme and an access purpose with the control server of the shore.

The transmitting of the information may extract an information field with a changed modified flag value from the at least one information field of the ship information table to use the extracted information field as the modified information when the ship server accesses the control server of the shore through a wideband radio communication network. Also, the transmitting of the information may determine a group flag and an importance flag to be retrieved from the ship information table according to an access purpose when the ship server accesses the control server of the shore through a satellite communication, and may extract an information field with a changed modified flag from information fields mapped with the determined importance flag and group flag to use the extracted information field as the modified information.

According to another aspect of the present invention, there is provided a method for an adaptive ship-to-shore information synchronization, the method including: receiving, by a ship server within a ship, an information retrieval condition transmitted from a control server of a shore; extracting, by the ship server, information corresponding to the received information retrieval condition from a ship information table having at least one information field to transmit the extracted information to the control server; and resetting, by the ship server, a modified flag value of the information transmitted to the control server as the ship server receives a message indicating that an information update at the control server is completed based on the transmitted information.

The information retrieval condition received in the receiving of the information retrieval condition may be determined according to an access purpose and an access scheme with the ship server

According to still another aspect of the present invention, there is provided a method for an adaptive ship-to-shore information synchronization, the method including: transmitting, by a ship server within a ship with a ship information table having at least one information field, a modified bitmap included in the ship information table to a control server of a shore according to an access to the control server of the shore; searching, by the ship server, the ship information table based on an information request message received from the control server to generate a response message using a value of a corresponding information field, and to transmit the response message to the control server; and resetting, by the ship server, a value of the modified bitmap transmitted to the control server as the ship server receives a message indicating that an information update at the control server is completed based on the response message.

The modified bitmap may correspond to a set of at least one modified bit indicating whether a pool identifier (ID) assigned to each of the at least one information field within the ship information table is changed.

The method may further include updating, by the control server of the shore, the modified bitmap transmitted in the transmitting of the modified bitmap by performing an OR operation with respect to the transmitted modified bitmap and a modified bitmap of a ship information table of the control server.

The information request message transmitted to the ship server in the transmitting of the response message may be generated based on a value of a modified bitmap of a ship information table of the control server when a request for information of the ship occurs at the shore.

According to yet another aspect of the present invention, there is provided an apparatus for an adaptive ship-to-shore information synchronization, the apparatus including: a database to include a ship information table having at least one information field; a controller to determine a retrieval condition about information to be transmitted to a control server of a shore according to an access purpose and an access scheme with the control server; a retrieval unit to retrieve an information field within the ship information table based on the determined information retrieval condition; and an information transmitter to transmit the retrieved information field to the control server of the shore.

The ship information table may include a field ID, a field name, and at least one field information with respect to each of the at least one field information.

The ship information table may further include at least one of a modified flag indicating whether corresponding field information is modified, an importance flag indicating an importance of the corresponding field information, and a group flag indicating group information including the corresponding field information, with respect to each of the at least one information field.

The ship information table may include a modified flag indicating whether corresponding field information is modified with respect to each of the at least one information field. The retrieval unit may retrieve an information field with a changed modified flag from the ship information table when the control server accesses a ship server of a ship through a wideband radio communication network,

The ship information table may further include a modified flag indicating whether corresponding field information is modified, an importance flag indicating an importance of the corresponding field information, and a group flag indicating group information including the corresponding field information, with respect to each of the at least one information field, The retrieval unit may retrieve information fields mapped with the group flag and the importance flag according to an access purpose when the control server of the shore accesses a ship server of a ship through a satellite communication, and retrieves an information field with the changed modified flag from the retrieved information fields.

According to embodiments of the present invention constructed as above, when a ship server accesses a control server of a shore, it is possible to minimize an information exchange according to a used communication technology (a wideband radio communication technology and a satellite communication technology), and to achieve an enhanced efficiency and optimization of information exchange using grouping of information fields and the like according to an access purpose.

In particular, the information exchange between a ship and a shore that is to be performed based on a narrow-band and expensive satellite communication may be reduced to a modified content.

Also, since only required information may be provided depending on circumstances, it is possible to decrease communication amount, communication cost, and service costs, and to thereby make a great contribution to distribution and spread of industry.

### BRIEF DESCRIPTION OF THE DRAWINGS

FIG. 1 is a schematic diagram of an entire system according to the present invention;
FIG. 2 is a block diagram illustrating an internal configuration of a ship server in an apparatus for an adaptive ship-to-shore information synchronization according to a first embodiment of the present invention;
FIG. 3 is a diagram illustrating an example of a ship information table of FIG. 2;
FIG. 4 is a diagram illustrating another example of the ship information table of FIG. 2;
FIG. 5 is a block diagram illustrating an internal configuration of a control server of a shore in the apparatus for the adaptive ship-to-shore information synchronization according to the first embodiment of the present invention;
FIG. 6 is a flowchart illustrating an example of a information synchronization process performed through an access between the ship server and the control server of the shore according to the first embodiment of the present invention;
FIG. 7 is a flowchart illustrating another example of the information synchronization process performed through an access between the ship server and the control server of the shore according to the first embodiment of the present invention;
FIG. 8 is a diagram illustrating an example of a ship information table in an apparatus for an adaptive ship-to-shore information synchronization according to a second embodiment of the present invention; and
FIG. 9 is a flowchart illustrating a method for an adaptive ship-to-shore information synchronization according to the second embodiment of the present invention.

### DETAILED DESCRIPTION OF THE PREFERRED EMBODIMENTS

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

Hereinafter, an apparatus and method for an adaptive ship-to-shore information synchronization according to the present invention will be described with reference to the accompanying drawings. Prior to describing the present invention, terms and words used in the present specification and claims should not be interpreted as general or lexical meaning. Accordingly, configuration disclosed in embodiments and drawings of the present invention are only exemplary examples and may not express all the technical spirits of the present invention. Therefore, it would be understood by those skilled in the art that a variety of equivalents and m odifications may be made without departing from the scope of the invention.

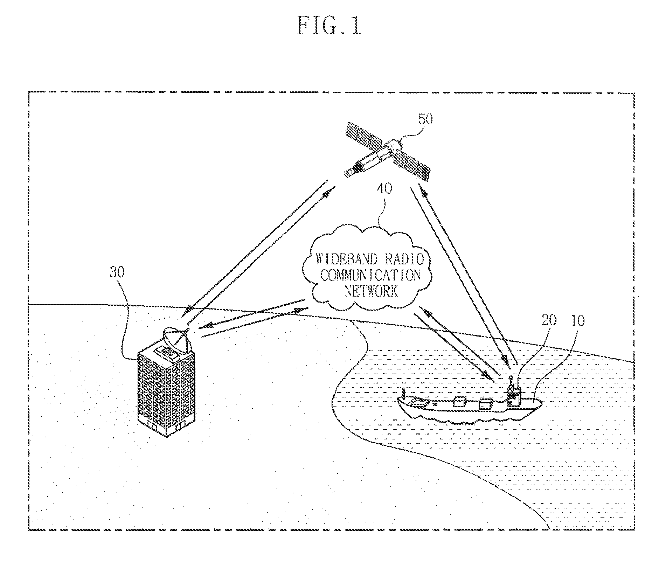

FIG 1 is a schematic diagram of an entire system according to the present invention. A ship sever 20 installed in a ship 10 and a control server 30 of a shore may communicate with each other over a wideband radio communication network 40 or a satellite 50. Although only the single ship server 20 is illustrated in FIG. 1, a plurality of ship servers may exist as necessary.

A connection state, that is, an access state between the ship server 20 and the control server 30 of the shore may be generally classified into two types. One is a wideband access state and another is a narrow-band access state. The wideband access state indicates a state where the ship server 20 receives a wideband radio communication service over the wideband radio communication network 40. The narrow-band access state indicates a state where the ship server 20 receives a narrow-band communication service such as a communication via the satellite 50.

A number of ship-to-shore information exchanges and an amount thereof may significantly increase for a next-generation ship service. When the ship 10 is in the narrow-band access state, information exchange may not be smoothly performed. Accordingly, a service provided to the ship 10 may be limited. To overcome this, the present invention proposes a system that may manage all the information of the ship 10 at both ends, that is, between the ship 10 and the shore.

The ship server 20 and the control server 30 of the shore may have ship information for a remote maintenance and repair, and a ship control service. The ship information may have a characteristic of giving priority to information maintained in the ship server 20. Once the ship 10 sets sails, the ship server 20 may take the initiative to change ship information. Ship information of the shore may be previous information or the same information compared to actual information of the ship 10. Therefore, information of the ship server 20 may have priority over information of the control server 30 of the shore at all times. Specifically, when two values are different, information of the ship server 20 may overwrite information of the control server 30 of the shore.

When the ship 10 is in the wideband access state, all the modified information may be synchronized with the shore, When the ship 10 is in the narrow-band access state, even the modified information may be classified into information to be synchronized and information not to be synchronized depending on an access purpose. Specifically, a target of synchronization information may vary according to the access purpose. Here, the access purpose may be classified into a party of a shore connector, a purpose of the shore connector, an importance of information, and the like. In the case of the classification according to the party of the shore connector, for example, when a connector belongs to A company, it indicates that only information associated with a system of the A company corresponds to a synchronization target. In the case of the classification according to the purpose of the shore connector, it indicates that synchronization target information may be classified according to the access purpose (e.g., monitoring, diagnosis, and the like) of the connector. In the case of the classification according to the importance of the information, it indicates that the target of synchronization information may be classified based on a real-time characteristic, an importance, a frequency, and the like of information.

Although not illustrated, a module, for example, an information request module (not shown) requesting information may be connected to each of the ship server 20 and the control server 30.

Moreover, ship information may be divided into two classes, static information and dynamic information. The static information may be information which is not changed frequently such as system information of a ship or crew information. The dynamic information may be information which is changed frequently such as location information or engine status information. For example, dynamic information may be synchronized with the control server in real time or periodically and static information may be synchronized with the control server only if there is a request.

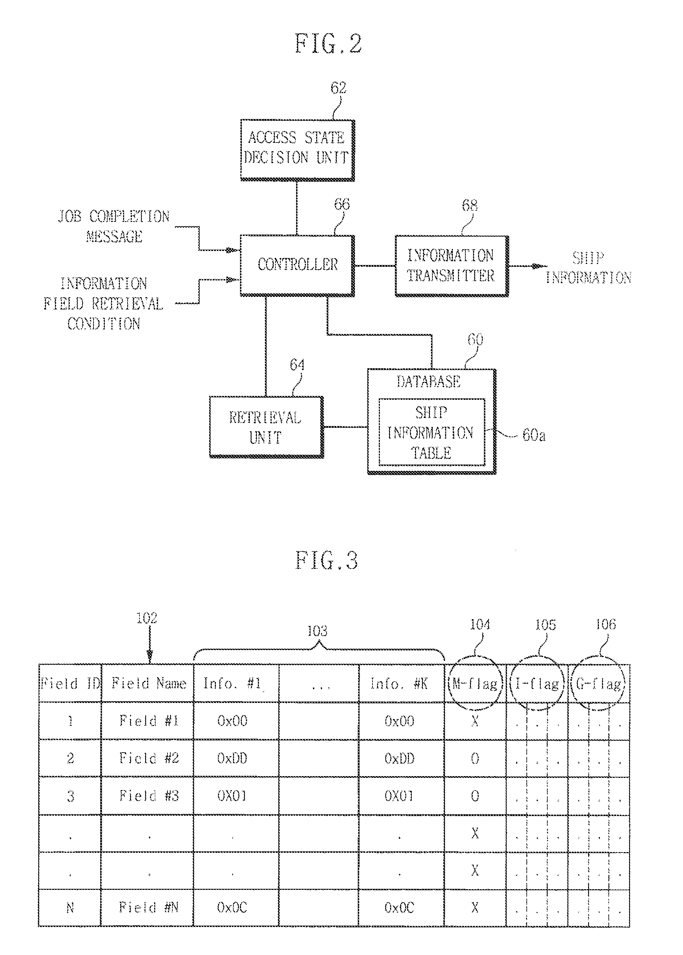

FIG. 2 is a block diagram illustrating an internal configuration of a ship server 20 in an apparatus for an adaptive ship-to-shore information synchronization according to a first embodiment of the present invention.

The ship server 20 may include a database 60, an access state decision unit 62, a retrieval unit 64, a controller 66, and an information transmitter 68.

The database 60 may include a ship information table 60a storing a plurality of ship information. The ship information table 60a will be further described later.

When the corresponding ship server 20 accesses the control server 30 of the shore, the access state decision unit 62 may determine whether the corresponding ship server 20 is in a wideband access state or in a narrow-band access state based on an accessed communication means (e.g., the wideband radio communication network 40 and the satellite 50). The access state decision unit 62 may be embedded in the controller 66, which is described below.

The controller 66 may control general operations of the ship server 20 to perform information synchronization between the ship 10 and the shore. The controller 66 may determine a condition to retrieve information to be transmitted to the control server 30 of the shore. The retrieval unit 64 may retrieve an information field within the ship information table 60a according to the information retrieval condition determined by the controller 66. When a job completion message (i.e., a message indicating that a job associated with information synchronization is completed) is received from the control server 30 of the shore, the controller 66 may perform reset (initialization) with respect to ship information transmitted to the control server 30 of the shore. The information retrieval condition may be determined by the control server 30 of the shore. When the information retrieval condition determined by the control server 30 of the shore is applied to the controller 66, the controller 66 may control the retrieval unit 64 to retrieve an information field within the ship information table 60a according to the applied information retrieval condition.

The information transmitter 68 may packetize and compress, into a set format, an information field to be transmitted to the control server 30 of the shore, and transmit the packetized and compressed information field according to a current accessed communication scheme.

FIG. 3 is a diagram illustrating an example of the ship information table 60a of FIG. 2. Hereinafter, the ship information table 60a may also be provided in the control server 30 of the shore in addition to the ship server 20. Specifically, a ship information table 70a of the control server 30 of the shore may be configured to have the same pattern as the ship information table 60a, which will be described later.

The ship information table 60a may include at least one information field. Each information field may include a field identifier (ID) 101, a field name 102, and field information 103 (Info.#1 to Info.#K). Each information field may further include a modified flag (M-Hag) 104 indicating whether corresponding field information is modified (changed), an importance flag (I-flag) 105 indicating an important of the corresponding field information, and a group flag (G-flag) 106 indicating group information including the corresponding field information. Here, the M-Hag 104 may include, for example, a single bit. Each of the I-flag 105 and the G-flag 106 may include at least one bit. A level of information maintained in the ship server 20 may be defined according to an importance, a system correlation, a real-time characteristic, and the like of the corresponding information, and grouping may be performed based on the defined level. Therefore, a set value is also referred to as the G-flag 106. For example, a method of assigning, for each page, a group number to information required for a web-based Graphic User Interface (GUI) including a plurality of pages, and using the group number for the G-flag 106, and the like may be employed.

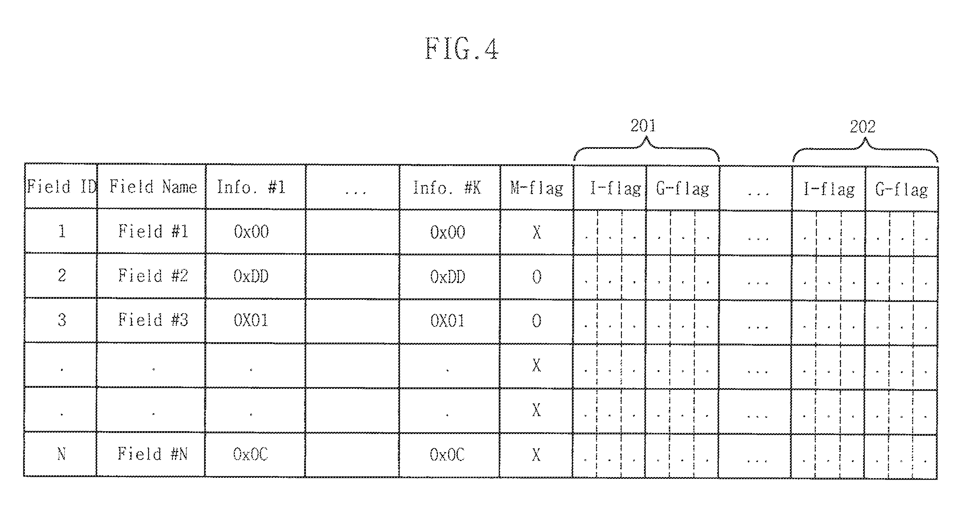

FIG. 4 is a diagram illustrating another example of the ship information table of FIG. 2. In FIG. 4, a plurality of pairs of <I-flag, G-flag> are applied to a single information field. Hereinafter, the ship information table 60a may also be provided in the control server 30 of the shore in addition to the ship server 20. Specifically, the ship information table 70a of the control server 30 may be configured to have the same pattern as the ship information table 60a, which will be described later. A plurality of pairs of <I-flag, G-flag> may exist in a single information field. This is because a single information field may belong to a plurality of groups and an importance of the information field may be different in each of the groups, In FIG. 4, a reference numeral 201 denotes a first pair of<I-flag, G-flag> and a reference number 202 denotes a last pair of <I-flag, G-flag>.

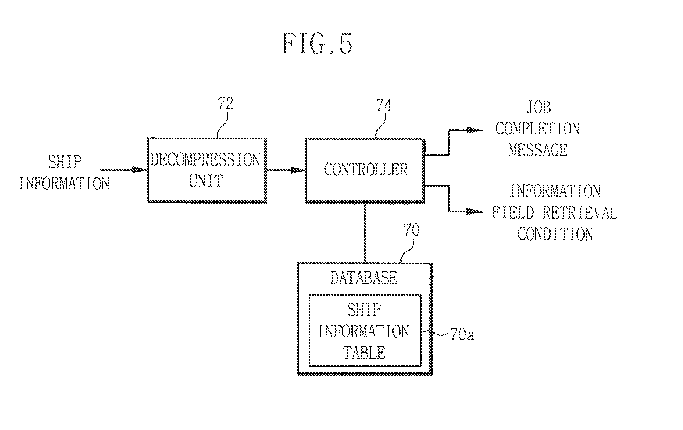

FIG. 5 is a block diagram illustrating an internal configuration of a control server of a shore in the apparatus for the adaptive ship-to-shore information synchronization according to the first embodiment of the present invention.

The control server 30 may include a database 70, a decompression unit 72, and a controller 74,

The database 70 of the control server 30 may be configured to be the same as the database 60 of the ship server 20. Specifically, the database 70 may include the ship information table 70a.

The decompression unit 72 may decompress ship information that is transmitted from the ship server 20, that is, compressed and transmitted ship information.

The controller 74 may copy the ship information decompressed by the decompression unit 72, and may overwrite the copied ship information to an information field with the same field ID currently maintained in the database 70. When the above overwrite is completed, the controller 74 may transmit a job completion message to the ship server 20. The controller 74 may also determine an information retrieve condition (i.e., whether to apply a group flag and an importance flag, a pair of flags to be applied, and the like). The controller 74 may also determine whether a current access state corresponds to a wideband access state or a narrow-band access state based on a communication means (i.e., the wideband radio communication network 40 and the satellite 50) used for an access with the ship server 20.

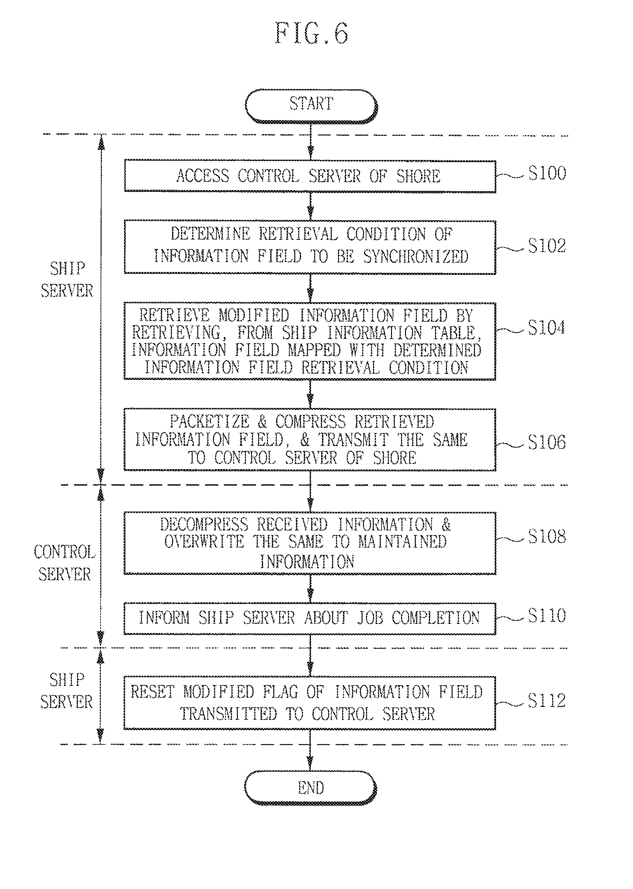

FIG. 6 is a flowchart illustrating an example of a information synchronization process performed through an access between the ship server and the control server of the shore according to the first embodiment of the present invention. In FIG. 6, when the ship accesses the shore, an access scheme, an access purpose, and the like may be determined by the ship server 20 of the ship.

The ship server 20 may access the control server 30 of the shore(S100). The ship server 20 may determine an information retrieval condition, for example, a value of a pair of<I-flag, G-flag>, to be synchronized according to an access scheme (a satellite communication and a wideband radio communication), and an access purpose (monitoring, diagnosis, and the like) (S102). The access state decision unit 62 of the ship server 20 may determine whether a current access state corresponds to a wideband access state or a narrow-band access state based on an accessed communication means,

The ship server 20 may retrieve information fields mapped with the determined information retrieval condition, and may retrieve an information field with a set, that is, changed modified flag from the retrieved information fields. For example, in the case of the wideband access state, the retrieval unit 64 of the ship server 20 may retrieve all the information fields with the set, that is, changed M-flag 104 from the ship information table 60a of the database 60. In the case of the narrow-band access state, the controller 66 may determine a group flag and an importance flag to be retrieved according to an access purpose of the ship, and the retrieval unit 64 may retrieve information fields corresponding to the determined group flag and importance flag from the ship information table 60a, and may retrieve an information field with the changed modified flag from the retrieved information fields (S104).

The ship server 20 may compress at least one information field finally retrieved by the search unit 64, and transmit the compressed at least one information field to the control server 30 of the shore (S106). Specifically, the information transmitter 68 of the ship server 20 may packetize and compress the retrieved at least one information field into a set format, for example, # of fields, <field ID, info#1, •••, info#K>, <field ID, info#1, •••, info#K>,•••. The information transmitter 68 may transmit, the compressed information to the control server 30 of the shore.

The control server 30 of the shore may decompress the compressed information and overwrite the decompressed information to a maintained information field with the same field ID (S108). Specifically, the decompression unit 72 of the control server 30 may decompress the transmitted packet. The controller 74 of the control server 30 may update an information field value with the same field ID included in the ship information table 70a with the received information field value.

The control server 30 of the shore may transmit a job completion message to the ship server 20, when the update is completed (S110).

When the job completion message is transmitted from the control server 30 of the shore, the controller 66 of the ship server 20 may reset the M-flag 104 of all the information fields that are retrieved in S104 and transmitted to the control server 30 (S112). When the information update at the shore is not verified, the ship server 20 may return to S 106 to retransmit information to the control server of the shore.

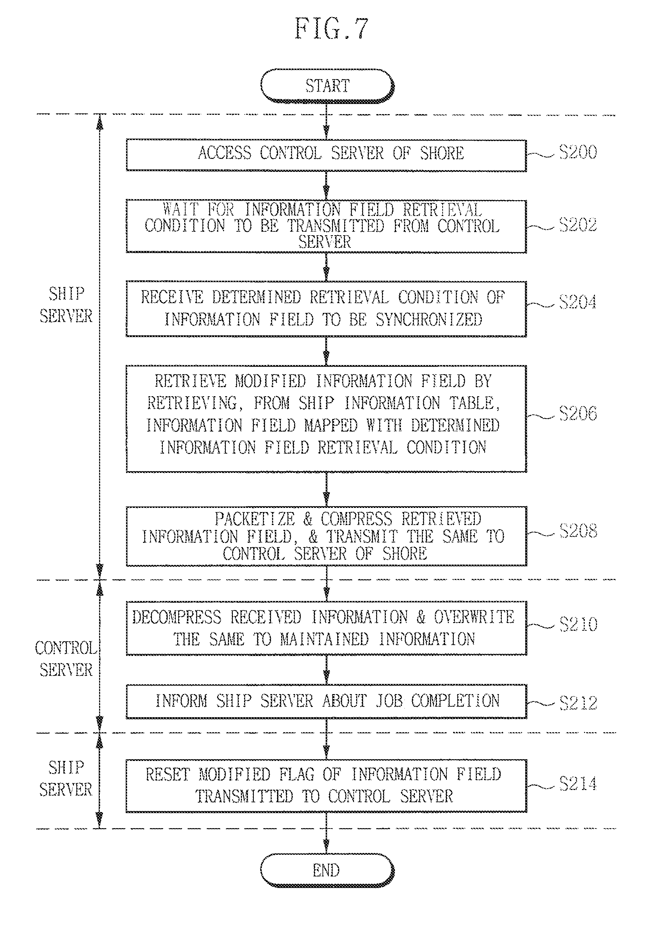

FIG. 7 is a flowchart illustrating another example of a information synchronization process performed through an access between the ship server and the control server of the shore according to the first embodiment of the present invention. In FIG. 7, when the ship accesses the shore, an access scheme, an access purpose, and the like may be determined by the shore.

The ship server 20 may access the control server 30 of the shore (S200).

The ship server 20 may wait for an information retrieval condition to be transferred from the control server 30 of the shore (S202).

While the ship server 20 is waiting, the control server 30 of the shore may determine an information retrieval condition, for example, a value of a pair of <I-flag, G-flag>, to be synchronized according to an access scheme (a satellite communication and a wideband radio communication), and an access purpose (monitoring, a diagnosis, and the like) (S204). The controller 74 of the control server 30 may determine whether a current access state corresponds to a wideband access state or a narrow-band access state based on an accessed communication means.

The ship server 20 may receive the determined information retrieval condition from the control server 30 of the shore. Accordingly, the ship server 20 may retrieve information fields mapped with the determined information retrieval condition, and may retrieve an information field with a set (changed) modified flag from the retrieved information fields. For example, in the case of the wideband access state, the retrieval unit 64of the ship server 20 may retrieve all the information fields with the set, that is, changed M-flag 104 from the ship information table 60a of the database 60. In the case of the narrow-band access state, the controller 66 may determine a group flag and an importance flag to be retrieved according to an access purpose of the ship, and the retrieval unit 64 may retrieve information fields corresponding to the determined group flag and importance flag from the ship information table 60a, and may retrieve an information field with the changed modified flag from the retrieved information fields (S206).

The ship server 20 may compress finally retrieved at least one information field from the retrieval unit 64 and transmit the compressed at least one information field to the control server 30 of the shore (S208). Specifically, the information transmitter 68 of the ship server 20 may packetize and compress the retrieved at least one information field into a set format (e.g, # of fields, <field ID, info#1, .., info#K>, <field ID, info#1, ..., info#K>, ...). The information transmitter 68 may transmit the compressed information to the control server 30 of the shore.

The control server 30 of the shore may decompress the compressed information and overwrite the decompressed information to a maintained information field with the same field ID (S210), Specifically, the decompression unit 72 of the control server 30 may decompress the transmitted packet. The controller 74 of the control server 30 may update an information field value with the same field ID included in the ship information table 70a with the received information field value.

The control server 30 of the shore may transmit a job completion message to the ship server 20 as the update is completed (S212).

When the job completion message is transmitted from the control server 30 of the shore, the controller 66 of the ship server 20 may reset the M-flag 104 of all the information fields that are retrieved in S206 and transmitted to the control server 30. (S214). When the information update at the shore is not verified, the ship server 20 may return to S208 to retransmit information to the control server of the shore.

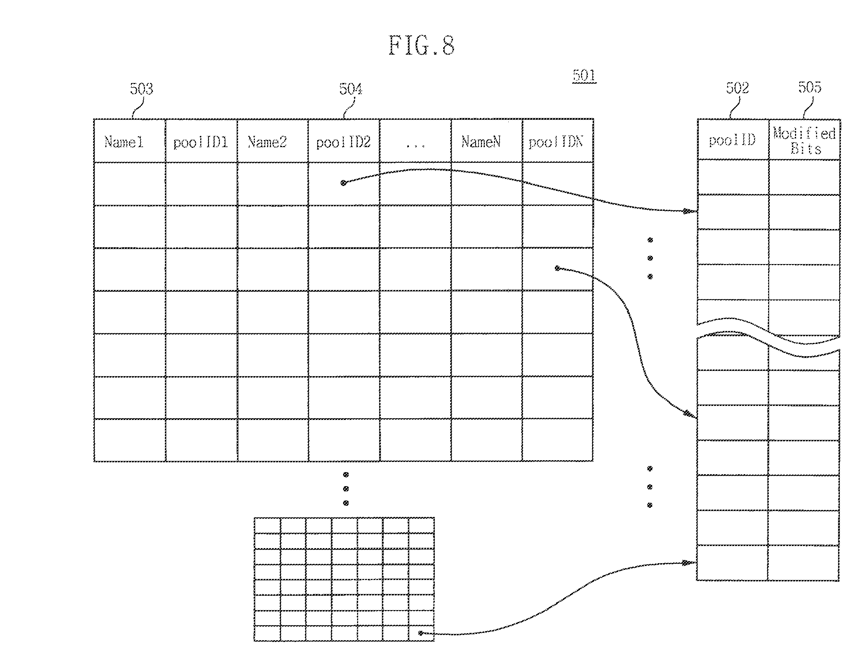

FIG. 8 is a diagram illustrating an example of a ship information table in an apparatus for an adaptive ship-to-shore information synchronization according to a second embodiment of the present invention. Ship information may be managed in a form of a table. Each of information fields constituting the ship information table 501 makes a one-to-one correspondence to a single pool ID. A name of information may be input into an information column 503 of the ship information table 501. The information column 503 may be followed by a pool ID column 504 where a corresponding pool ID may be assigned to each respective corresponding information field. A pool ID assigned to the information field may be input into the pool ID column 504. Assigned pool IDs may be used as indexes of a modified bit table 502 where a modified bit 505 ( which is the same concept as a modified flag in FIG. 3 and FIG. 4) of each information field makes a one-to-one correspondence to a pool ID. The aforementioned ship information table 501 may be provided in a form slightly different from the ship information table of FIG. 3 and FIG. 4, however, may be understood to be provided in the ship server 20 and the control server 30 for adaptive ship-to-shore information synchronization.

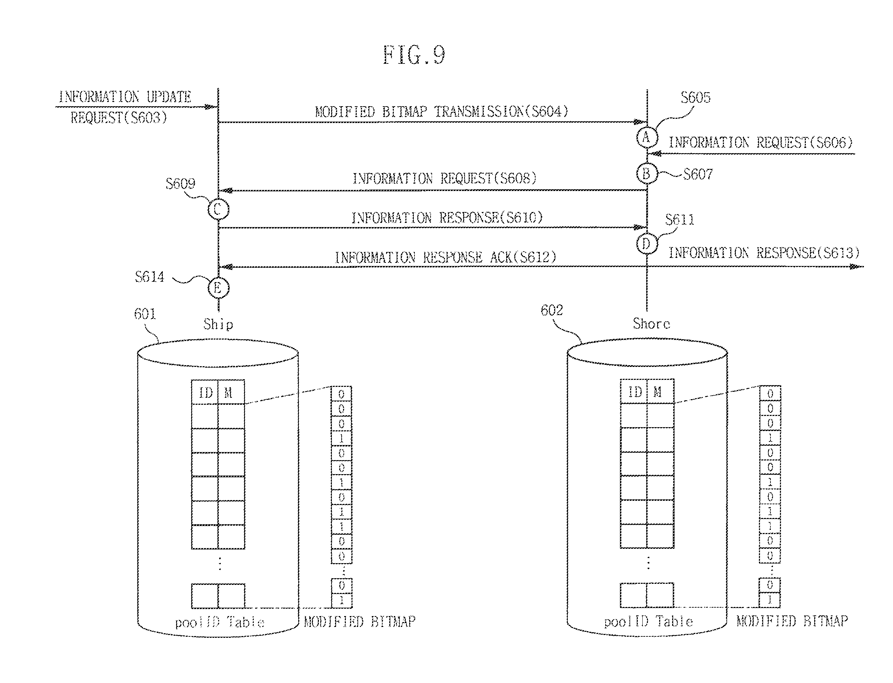

FIG. 9 is a flowchart illustrating a method for an adaptive ship-to-shore information synchronization according to the second embodiment of the present invention. Hereinafter, a method of decreasing an information exchange using an ship information table 601 of a ship corresponding to a pool ID table and an ship information table 602 of a shore corresponding to the pool ID table will be described with reference to FIG. 9. More specifically, a procedure of synchronizing the modified bit table 502 managed at the ship and the shore and minimizing the information exchange based on the synchronized modified bit 505 will be described with reference to Fig. 9.

When a value of the ship information table 601 is modified (S603), the ship server 20 may modify a corresponding information field based on the modified value, and may access the modified bit table 502 using a pool ID assigned to the corresponding information field to set the corresponding modified bit 505 to "1".

When an initialization or a predetermined condition occurs due to an access between the ship and the shore, the ship server 20 may transmit a modified bitmap (i.e., a set of modified bits indicating whether a pool ID assigned to each field of the ship information table is changed) of the modified bit table 502 to the control server 30 of the shore (S604).

The control server 30 of the shore may perform update by performing an OR operation with respect to the received modified bitmap and a modified bit map (i.e., all the modified bits) maintained in the ship information table 602 of the control server 30 (A; S605). Through the OR operation, what is different between information of the ship and information of the sore may be found.

When a request for information of the ship occurs in any information request module (not shown) of the shore (S606), the control server 30 of the shore may verify the modified bitmap of the ship information table 602 (B; S607).

When a value of the modified bit 505 is verified as "1", the control server 30 of the shore may transmit an information request message to the ship server 20 (S608). Conversely, when the value of the modified bit 505 is verified as "0", the control server 30 of the shore may generate an information response message using a value of a corresponding information field of the ship information table 602 (D; S611), and may transfer the information response message to the information request module (S613).

When the information request message is transmitted to the ship server 20, the ship server 20 may search the ship information table 601 and generate a response message using a value of a corresponding information field (C; S609), and then transmit the information response to the control server 30 of the shore (S610). Accordingly, the control server 30 of the shore may update a corresponding information field of the ship information table 602 with information contained in the information response and reset the corresponding modified bit to "0" (S611).

The control server 30 of the shore may transmit, to the ship, an acknowledge (ACK) signal, that is, an information response ACK with respect to the information response (S612), and the ship server 20 receiving the information response ACK. may reset, to "0", a modified bit of a corresponding information field (E; S614).

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A method for an adaptive ship-to-shore information synchronization, the method comprising:
extracting, by a ship server within a ship, modified information from a ship information table having at least one information field to transmit the extracted modified information to a control server of a shore; and
resetting, by the ship server, a modified flag value of the information transmitted to the control server as the ship server receives a message indicating that an information update at the control server is completed based on the transmitted information.

2. The method according to claim 1, wherein the transmitting of the information comprises extracting the modified information according to an access scheme and an access purpose with the control server of the shore.

3. The method according to claim 1, wherein the transmitting of the information extracts an information field with a changed modified flag value from the at least one information field of the ship information table to use the extracted information field as the modified information when the ship server accesses the control server of the shore through a wideband radio communication network.

4. The method according to claim 1, wherein the transmitting of the information determines a group flag and an importance flag to be retrieved from the ship information table according to an access purpose when the ship server accesses the control server of the shore through a satellite communication, and extracts an information field with a changed modified flag from information fields mapped with the determined importance flag and group flag to use the extracted information field as the modified information.

5. A method for an adaptive ship-to-shore information synchronization, the method comprising:
receiving, by a ship server within a ship, an information retrieval condition transmitted from a control server of a shore;
extracting, by the ship server, information corresponding to the received information retrieval condition from a ship information table having at least one information field to transmit the extracted information to the control server; and
resetting, by the ship server, a modified flag value of the information transmitted to the control server as the ship server receives a message indicating that an information update at the control server is completed based on the transmitted information.

6. The method according to claim 5, wherein the information retrieval condition received in the receiving of the information retrieval condition is determined according to an access purpose and an access scheme with the ship server.

7. A method for an adaptive ship-to-shore information synchronization, the method comprising:
transmitting, by a ship server within a ship with a ship information table having at least one information field, a modified bitmap included in the ship information table to a control server of a shore according to an access to the control server of the shore;
searching, by the ship server, the ship information table based on an information request message received from the control server to generate a response message, using a value of a corresponding information Held; and to transmit the response message to the control server; and
resetting, by the ship server, a value of the modified bitmap transmitted to the control server as the ship server receives a message indicating that an information update at the control server is completed based on the response message.

8. The method according to claim 7, wherein the modified bitmap corresponds to a set of at least one modified bit indicating whether a pool identifier (ID) assigned to each of the at least one information field within the ship information table is changed.

9. The method according to claim 7, further comprising:
updating, by the control server of the shore, the modified bitmap transmitted in the transmitting of the modified bitmap by performing an OR operation with respect to the transmitted modified bitmap and a modified bitmap of a ship information table of the control server.

10. The method according to claim 7, wherein the information request message transmitted to the ship server in the transmitting of the response message is generated based on a value of a modified bitmap of a ship information table of the control server when a request for information of the ship occurs at the shore.

11. An apparatus for an adaptive ship-to-shore information synchronization, the apparatus comprising:
a database to include a ship information table having at least one information field;
a controller to determine a retrieval condition about information to be transmitted to a control server of a shore according to an access purpose and an access scheme with the control server;
a retrieval unit to retrieve an information field within the ship information table based on the determined information retrieval condition; and
an information transmitter to transmit the retrieved information field to the control server of the shore.

12. The apparatus according to claim 11, wherein the ship information table comprises a field ID, a field name, and at least one field information with respect to each of the at least one information field.

13. The apparatus according to claim 12, wherein the ship information table further comprises at least one of a modified flag indicating whether corresponding field information is modified, an importance flag indicating an importance of the corresponding field information, and a group flag indicating group information including the corresponding field information, with respect to each of the at least one information field.

14. The apparatus according to claim 11, wherein:
the ship information table comprises a modified flag indicating whether corresponding field information is modified with respect to each of the at least one information field, and
the retrieval unit retrieves an information field with a changed modified flag from the ship information table when the control server accesses a ship server of a ship through a wideband radio communication network.

15. The apparatus according to claim 11, wherein:
the ship information table further comprises a modified flag indicating whether corresponding field information is modified, an importance flag indicating an importance, of the corresponding field and a group flag indicating group information including the corresponding field information, with respect to each of the at least one information field, and
the retrieval unit retrieves information fields mapped with the group flag and the importance flag according to an access purpose when the control server of the shore accesses a ship server of a ship through a satellite communication, and retrieves an information field with the changed modified flag from the retrieved information fields.
